# EUROPÄISCHE PATENTANMELDUNG

(11) **EP 2 141 479 A2**
(43) Veröffentlichungstag der Anmeldung: **06.01.2010**
(21) Anmeldenummer: 09008669.5
(22) Anmeldetag: 02.07.2009
(51) Int. Cl.: G01N 1/28

(54) **Vorrichtung zum Einpressen pulverförmigen Materials in Hohlkörper**

(30) Priorität: 04.07.2008 DE 102008031359
(71) Anmelder: Herzog Maschinenfabrik GmbH & Co., D-49086 Osnabrück (DE)
(72) Erfinder: Hawickhorst, Günther, 49565 Bramsche (DE)
(74) Vertreter: Philipp, Matthias

(57) **Zusammenfassung**

Vorrichtung zum Einpressen pulverförmigen Materials in Hohlkörper, mit einem um eine Drehachse taktweise drehantreibbaren Drehtisch, auf dem in gleichen gegenseitigen, auf die Drehachse bezogenen Umfangswinkelabständen Halteeinrichtungen zum vorübergehenden Fixieren jeweils eines Hohlkörpers angeordnet sind, wobei benachbart zu dem Drehtisch in übereinstimmenden Umfangswinkelabständen Arbeitsstationen zum Zusammenwirken mit in den Halteeinrichtungen gehaltenen Hohlkörpern angeordnet sind, wobei eine erste Arbeitsstation eine Zuführeinrichtung für einzelne Hohlkörper aufweist, eine zweite Arbeitsstation eine Dosiereinrichtung für zu verpressendes pulverförmiges Material aufweist, eine dritte Arbeitsstation eine Abstreifeinrichtung zum Abstreifen überschüssigen pulverförmigen Materials aufweist, eine vierte Arbeitsstation eine Presseinrichtung zum Verpressen von in einen Hohlkörper dosierten Materials aufweist, eine fünfte Arbeitsstation eine Ausgabeeinrichtung zum Ausgeben eines mit verpresstem Material gefüllten Hohlkörpers aufweist, und eine sechste Arbeitsstation eine Reinigungseinrichtung zum Reinigen einer Halteeinrichtung vor dem Einlegen eines Hohlkörpers aufweist.

## Beschreibung

Die Erfindung betrifft eine Vorrichtung zum Einpressen von pulverförmigen Materialien in Hohlkörper, beispielsweise Stahlringe, beispielsweise zum Herstellen von Proben für röntgendiffraktrometrische Untersuchungen im metallurgischen Bereich.

Es ist bekannt, zu untersuchendes pulverförmiges Ausgangsmaterial manuell in Hohlkörper wie Stahlringe zu verpressen, wobei der Stahlring gleichzeitig einseitig mit einer napfförmigen Verschlusskappe verschlossen wird, um ein Herausfallen der gepressten Pulverfüllung zu verhindern. Aufgrund der zahlreichen damit verbundenen Arbeitsschritte, auch im Hinblick auf Reinigung, Zu- und Abförderung der Stahlringe usw., ist die bekannte Vorgehensweise allerdings sehr zeitraubend.

Die Aufgabe der Erfindung besteht darin, eine Vorrichtung zum Einpressen pulverförmiger Materialien in Hohlkörper bereitzustellen, mit der die genannten Arbeitsschritte wesentlich schneller und einfacher als bisher und mit gleichbleibender Qualität durchgeführt werden können.

Diese Aufgabe wird erfindungsgemäß gelöst durch eine Vorrichtung zum Einpressen pulverförmigen Materials in Hohlkörper, mit einem um eine Drehachse taktweise drehantreibbaren Drehtisch, auf dem in gleichen gegenseitigen, auf die Drehachse bezogenen Umfangswinkelabständen Halteeinrichtungen zum vorübergehenden Fixieren jeweils eines Hohlkörpers angeordnet sind, wobei benachbart zu dem Drehtisch in übereinstimmenden Umfangswinkelabständen Arbeitsstationen zum Zusammenwirken mit in den Halteeinrichtungen gehaltenen Hohlkörpern angeordnet sind, wobei eine erste Arbeitsstation eine Zuführeinrichtung für einzelne Hohlkörper aufweist, eine zweite Arbeitsstation eine Dosiereinrichtung für zu verpressendes pulverförmiges Material aufweist, eine dritte Arbeitsstation eine Abstreifeinrichtung zum Abstreifen überschüssigen pulverförmigen Materials aufweist, eine vierte Arbeitsstation eine Presseinrichtung zum Verpressen von in einen Hohlkörper dosiertem Material aufweist, eine fünfte Arbeitsstation eine Ausgabeeinrichtung zum Ausgeben eines mit verpresstem Material gefüllten Hohlkörpers aufweist, und eine sechste Arbeitsstation eine Reinigungseinrichtung zum Reinigen einer Halteeinrichtung vor dem Einlegen eines Hohlkörpers aufweist.

Durch die karussellartige Anordnung der Arbeitsstationen kann entweder ein einzelner Hohlkörper mit pulverförmigen Material gefüllt und dieses darin verpresst werden, oder aber es können bei entsprechendem Arbeitsanfall mehrere Hohlkörper gleichzeitig bearbeitet werden, d.h. gefüllt, abgestreift, verpresst und ausgegeben werden, so dass eine erhebliche Verarbeitungsgeschwindigkeit erreicht werden kann.

Bevorzugt ist weiter vorgesehen, dass unter dem Drehtisch eine Sammeleinrichtung für von den einzelnen Arbeitsstationen herabfallendes pulverförmiges Material angeordnet ist. Dabei kann es sich bevorzugt um einen den Drehtisch untergreifenden Auffangtrichter handeln, der mit dem Drehtisch verbunden sein und mit diesem mitdrehen kann. Zweckmäßigerweise ist die Saugeinrichtung mit einem Sauganschluss zur Absaugung aufgefangenen Materials versehen.

Zweckmäßigerweise ist vorgesehen, dass jede Halteeinrichtung eine Auflage für einen Hohlkörper und mindestens einen Spannarm zum Aufspannen eines Hohlkörpers auf die Auflage aufweist. Bevorzugt sind zwei gegenüberliegende Spannarme vorgesehen.

Die Zuführeinrichtung kann einen Schwenkgreifer zum Aufnehmen eines Hohlkörpers von einer Zufördereinrichtung und zum Auflegen auf eine Auflage einer Halteeinrichtung aufweisen. Die Zufördereinrichtung ist bevorzugt als Förderband ausgebildet.

Die Dosiereinrichtung kann einen an einen Materialvorrat angeschlossenen Dosierschlauch und zwei beiderseits des Dosierschlauchs angeordnete und mit diesem zusammenwirkende Klemmbackenpaare aufweisen. Weiterhin kann der Dosiereinrichtung eine mit Druckluft beaufschlagbare Reinigungslanze zugeordnet sein.

Die Erfindung sieht bevorzugt vor, dass die Abstreifeinrichtung ein parallel und radial zu dem Drehtisch verfahrbares Abstreifelement aufweist, um überschüssiges pulverförmiges Material von dem Hohlkörper abzustreifen.

Die Presseinrichtung weist bevorzugt einen zylindrischen Presskolben auf. Weiterhin ist zweckmäßig, wenn die Presseinrichtung mindestens einen federbelasteten Niederhalter zur Anlage gegen den mindestens einen Spannarm einer Halteeinrichtung aufweist.

In einer bevorzugten Ausführungsform weist die Presseinrichtung einen zwischen einer Pressposition und einer Aufnahmeposition schwenkbaren Presszylinder, in oder an dem der Presskolben geführt ist, auf, wobei der Presskolben in der Aufnahmeposition mit einer Zufördereinrichtung für in die Hohlkörper einzupressende Verschlusselemente zusammenwirkt. Weiterhin ist vorgesehen, dass der Presskolben eine Saugbohrung zum Ansaugen und Halten eines Verschlusselements aufweist.

Die Ausgabeeinrichtung kann einen Schwenkgreifer zum Erfassen eines Hohlkörpers und Ablegen auf einer Abfördereinrichtung aufweisen. Der Schwenkgreifer kann um eine horizontale Schwenkachse schwenkbar sein, um die Hohlkörper in einer um 180° gedrehten Orientierung auf der Abfördereinrichtung abzulegen.

Die Reinigungseinrichtung kann mit einer parallel zu dem Drehtisch bewegbaren und ggf. rotierend antreibbaren Reinigungsbürste versehen sein. Zum Entfernen von restlichem pulverförmigen Material ist es zweckmäßig, wenn die Reinigungseinrichtung mit einem Mittel zum Abheben der Spannarme von der Auflage einer jeweils zu reinigenden Halteeinrichtung versehen ist, damit die Reinigungsbürste die Auflagen und Spannarme optimal reinigen kann.

Weitere Vorteile und Merkmale der Erfindung ergeben sich aus der nachfolgenden Beschreibung eines Ausführungsbeispiels, wobei auf eine Zeichnung Bezug genommen ist, in der
Fig. 1 eine Draufsicht auf die erfindungsgemäße Vorrichtung zeigt;
Fig. 2 eine perspektivische Ansicht der Vorrichtung nach Fig. 1 zeigt;
Fig. 3 eine vertikale Schnittansicht durch einen Teil der Vorrichtung nach Fig. 1 zeigt;
Fig. 4a, b eine Draufsicht und eine Schnittansicht einer Zuführungseinrichtung für Stahlringe zeigt;
Fig. 5 eine vertikale Schnittansicht durch eine Dosierungseinrichtung zeigt;
Fig. 6 eine vertikale Schnittansicht einer Abstreifeinrichtung zeigt;
Fig. 7a, b jeweils eine vertikale Schnittansicht einer Presseinrichtung in zwei Positionen zeigen;
Fig. 8a, b jeweils eine vertikale Schnittansicht einer Ausgabeeinrichtung in zwei Positionen zeigen;
Fig. 9a, b jeweils eine vertikale Schnittansicht einer Reinigungseinrichtung entlang zueinander senkrechter Schnittebenen zeigen, und
Fig. 10 einen fertig gefüllten und verpressten Stahlring zeigt.

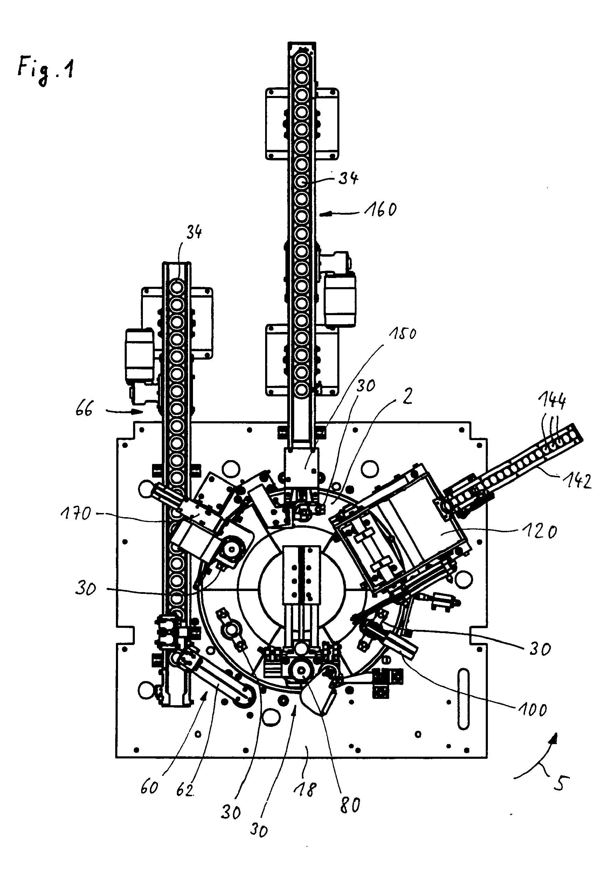

Unter Bezugnahme zunächst auf Fig. 1 bis 3 besteht die erfindungsgemäße Pressvorrichtung im wesentlichen aus einem Drehtisch 2, der um eine senkrechte Drehachse 4 mittels Lagern 6 an einem Maschinengestell 8 gelagert ist. Unterhalb des Drehtischs 2 ist eine Sammeleinrichtung für herabfallendes pulverförmiges Material in Form eines mit dem Drehtisch fest verbundenen Auffangtrichters 10 ausgebildet. An dem Auffangtrichter 10 ist ein Kettenrad 12 befestigt, das zum Drehantrieb des Drehtischs 2 mittels eines Antriebsmotors 14 unter Vermittlung einer Antriebkette 16 dient.

Ein Maschinentisch 18 ist in einer zu dem Drehtisch 2 parallelen Ebene, aber etwas unterhalb davon ortsfest angeordnet.

An den Auffangtrichter 10 schließt sich an dessen unterem Ende ein Lagerrohr 20 an, das unter geeigneter Abdichtung wiederum an einen nicht mitdrehenden Absaugstutzen 22 anschließt, der über einen flexiblen Saugschlauch 24 mit einer Absaugvorrichtung verbunden ist.

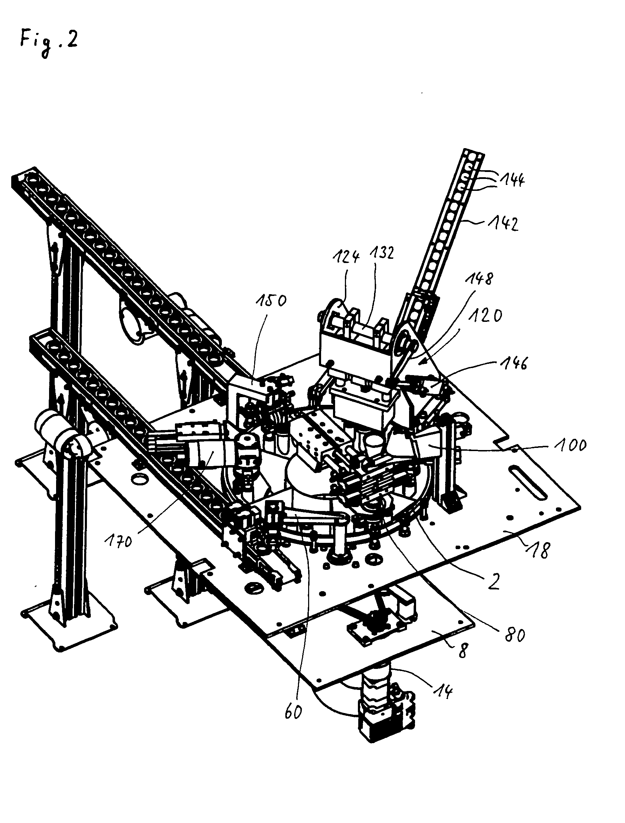

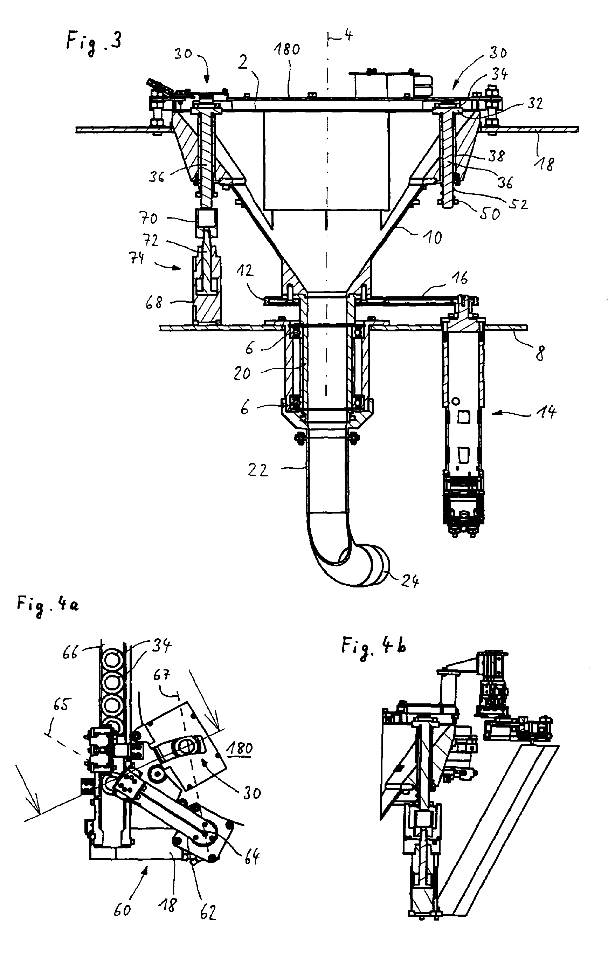

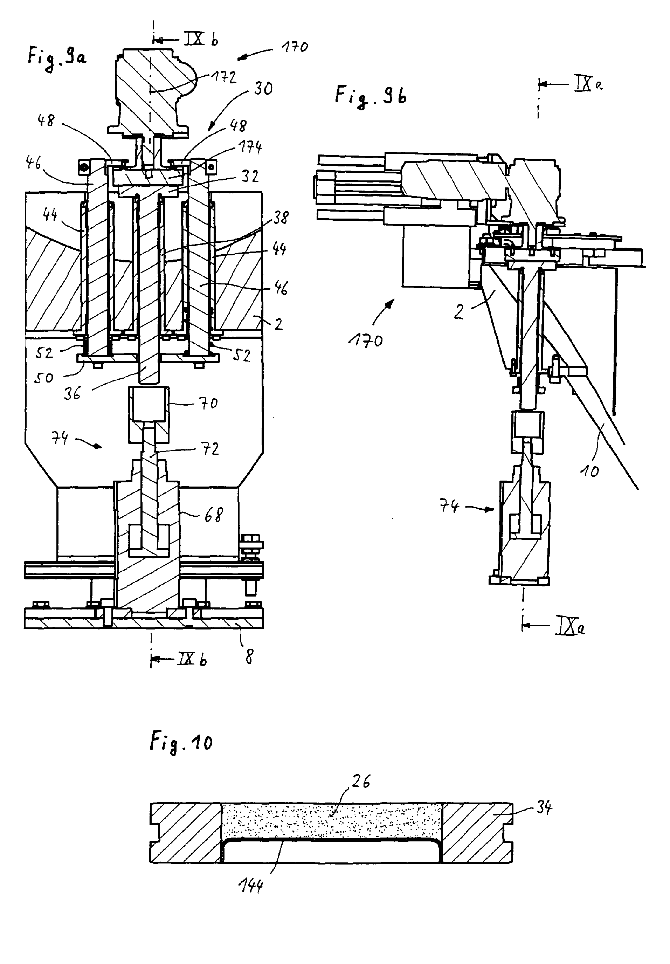

Fig. 1 und 2 zeigen die einzelnen Arbeitsstationen, die auf dem Maschinentisch 18 zum Zusammenwirken mit einer Anzahl von auf dem Drehtisch angeordneten Halteeinrichtungen 30 vorgesehen sind. Wie Fig. 1 und 3 erkennen lassen, sind auf dem Drehtisch 2 insgesamt sechs Halteeinrichtungen 30 in gleichen gegenseitigen auf die Drehachse 4 bezogenen Umfangswinkelabständen von 60° angeordnet, die jeweils eine Auflage 32 zum Aufnehmen eines zu füllenden Hohlkörpers, der in dem dargestellten Beispiel durch einen Stahlring 34 gebildet ist, sowie zwei einander gegenüberliegende Spannarme 36 zum Festspannen des Stahlrings 34 auf der Unterlage 32 aufweisen und deren weiterer Aufbau sich im einzelnen aus Fig. 9a und b ergibt.

Fig. 9a zeigt eine Schnittansicht entlang einer tangential bezüglich der Drehachse 2 orientierten Schnittebene (Linie IXa in Fig. 9b), die mittig durch die Auflage 32 verläuft, während Fig. 9b eine Schnittdarstellung entlang einer zugehörigen Radialebene (Linie IXb in Fig. 9a) zeigt.

Jede Halteeinrichtung 30 weist einen zentralen Stößel 36 auf, der vertikal verschieblich in einer an dem Drehtisch 2 befestigten Führung 38 geführt ist und an seinem oberen Ende einen verbreiterten Kopf aufweist, der die Auflage 32 bildet, auf der die zu füllenden Hohlkörper bzw. Stahlringe zur Auflage kommen. Beiderseits der Führung 38 sind mit Abstand dazu zwei weitere vertikale Führungen 44 mit dem Drehtisch 2 verbunden, in denen jeweils eine Zugstange 46 vertikal verschieblich geführt ist, die an ihrem oberen Ende einen Spannarm 48 trägt. An ihren unteren Enden sind die Zugstangen 46 durch eine Verbindungsplatte 50 miteinander verbunden. Druckfedern 52, die zwischen dem Drehtisch 2 und der Verbindungsplatte 50 wirken, spannen die Spannarme 48 gegen den Stößel 36 und somit gegen die Auflage 32 nach unten vor. Jeder Spannarm ist innenseitig unter ca. 15° zur Vertikalen abgeschrägt, damit ein mit einer gewissen Positionstoleranz abgelegter Stahlring auf der Auflage 32 exakt zentriert und positioniert wird, wenn die Spannarme abgesenkt werden.

Fig. 1, 2 und 4a, b erläutern eine Zuführungseinrichtung 60 für Hohlkörper in Form von Stahlringen 34. Ein Schwenkgreifer 62 ist auf dem Maschinentisch 18 um eine Schwenkachse 64 schwenkbar gehalten, so dass er zwischen einer ersten Schwenkposition 65, in der ein Stahlring 34 von einem Zuförderer 66 abgenommen werden kann (Fig. 4a), in eine zweite (in Fig. 4a gestrichelt angegeben) Schwenkposition 67 bewegt werden kann, in der der gegriffene Stahlring 34 auf eine Auflage 32 einer entsprechend positionierten Halteeinrichtung 30 auf dem Drehtisch 2 abgelegt werden kann.

Um einen Stahlring 34 auf eine Auflage 32 einer bereitstehenden Halteeinrichtung 30 auflegen zu können, müssen zunächst die Spannarme 48 gegen die Kraft der Druckfedern 52 gegenüber der Auflage angehoben werden. Hierfür ist der Zuführeinrichtung eine auf dem Maschinengestell 8 befestigte Öffnungseinrichtung 74 (s. Fig. 3 und 9a, b) mit einer hydraulisch oder pneumatisch betätigten Kolben-/Zylindereinheit 68 zugeordnet, die mittels eines becherförmigen Druckteils 70, das an der Kolbenstange 72 der Kolben-/Zylindereinheit 68 befestigt ist und mit der Verbindungsplatte 50 zusammenwirken kann, die Zugstangen 46 nach oben drücken und dadurch einen Zwischenraum zwischen Auflage 32 und Spannarmen 48 erzeugen kann, in den ein Stahlring 34 eingelegt werden kann.

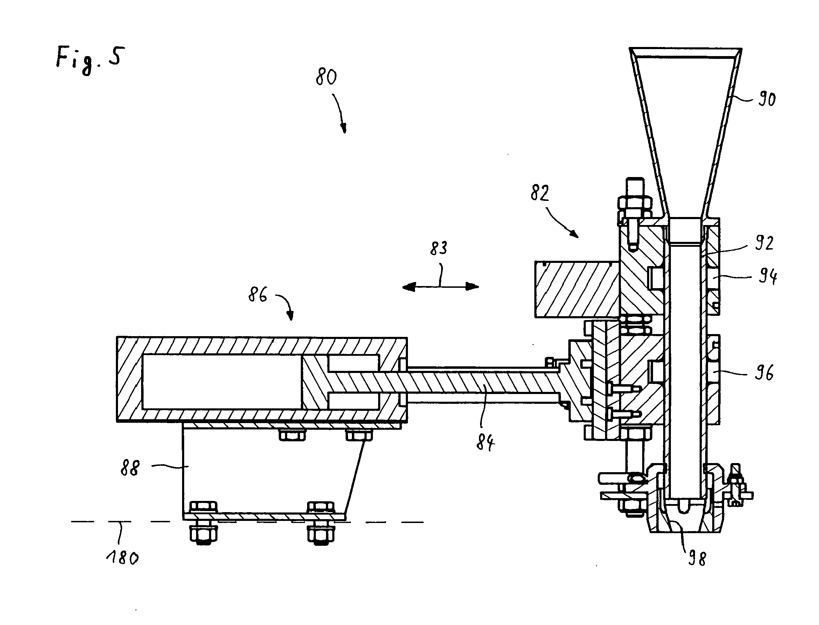

In der Draufsicht von oben nach Fig. 1 ist im Gegenuhrzeigersinn betrachtet, welches auch der Arbeitsrichtung 5 des Drehtischs 2 im Betrieb entspricht, benachbart zu der Zuführeinrichtung 60 eine Dosiereinrichtung 80 angeordnet, die in Fig. 5 näher dargestellt ist. Ein Dosierkopf 82 ist an einer horizontal aus- und einfahrbaren Kolbenstange 84 einer Kolben/Zylindereinheit 86 angebracht, die über einen Befestigungswinkel 88 an einer oberhalb des Drehtellers 2 befestigten und weiter unten erläuterten Abdeckung 180 ortsfest gehalten ist. Wie auch Fig. 1 erkennen lässt, kann der Dosierkopf 82 somit in radialer Richtung 83 hinund herbewegt werden, wobei eine ausgefahrene Stellung der Kolben-/Zylindereinheit 86 (s. Fig. 1) einer Dosierposition oberhalb einer Halteeinrichtung 30 und eines zu befüllenden Stahlrings 34 entspricht.

Der Dosierkopf 82 weist einen Einfülltrichter 90 auf, dessen unteres Ende in einen elastischen Dosierschlauch 92 mündet. Der Dosierschlauch 92 kann an zwei vertikal beabstandeten Positionen von zwei nicht dargestellten Klemmbackenpaaren, die in Führungsnuten 94, 96 horizontal beweglich sind, in Höhe dieser Führungsnuten wahlweise abgeklemmt oder geöffnet werden. Durch abwechselndes Öffnen und Schließen der oberen und unteren Klemmbacken kann eine Materialmenge, die dem Innenvolumen des Dosierschlauchs 92 im Bereich zwischen den Führungsnuten 94, 96 entspricht, nach unten durch eine am unteren Ende des Dosierschlauchs 92 anschließende Dosiermündung 98 in einen zu füllenden Strahlring 34 abgegeben werden.

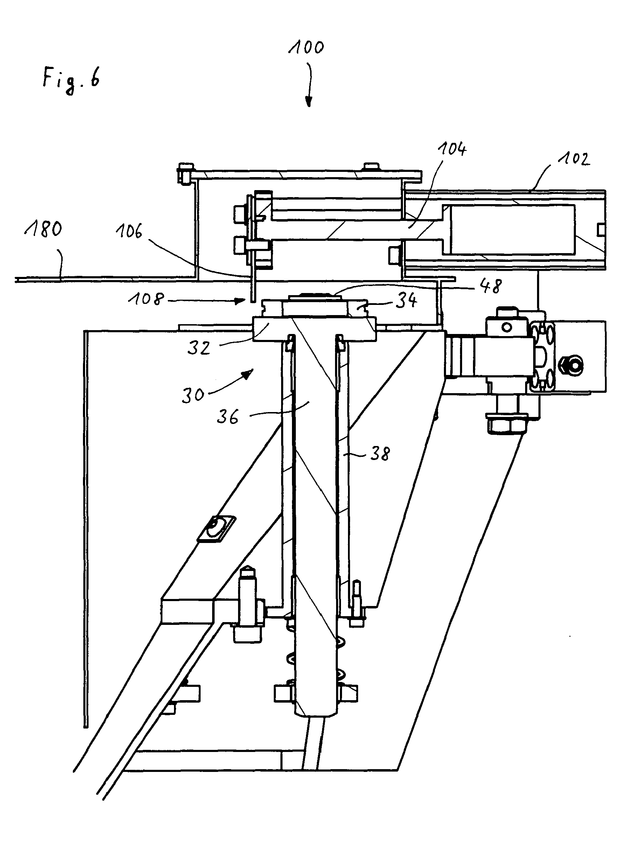

In Arbeitsrichtung benachbart zu der Dosiereinrichtung 80 befindet sich eine Abstreifeinrichtung 100, die in Fig. 6 näher dargestellt ist. Auf dem Maschinentisch 18 ist eine radial ausgerichtete Kolben-/Zylindereinheit 102 angebracht, deren Kolbenstange 104 ein elastisches Abstreifelement 106 trägt, dessen Abstreifkante 108 in der in Fig. 6 dargestellten ausgeschobenen Stellung der Kolben-/Zylindereinheit 102 radial innerhalb einer Halteeinrichtung 30 steht und bei Einzug der Kolben-/Zylindereinheit 102 unter Ausführung einer Abstreifbewegung über die Oberseite eines von den Spannarmen 48 gehaltenen Stahlrings 34 hinweggeht und überschüssiges eingefülltes Material abstreift, so dass der Stahlring anschließend bündig mit pulverförmigem Material gefüllt ist.

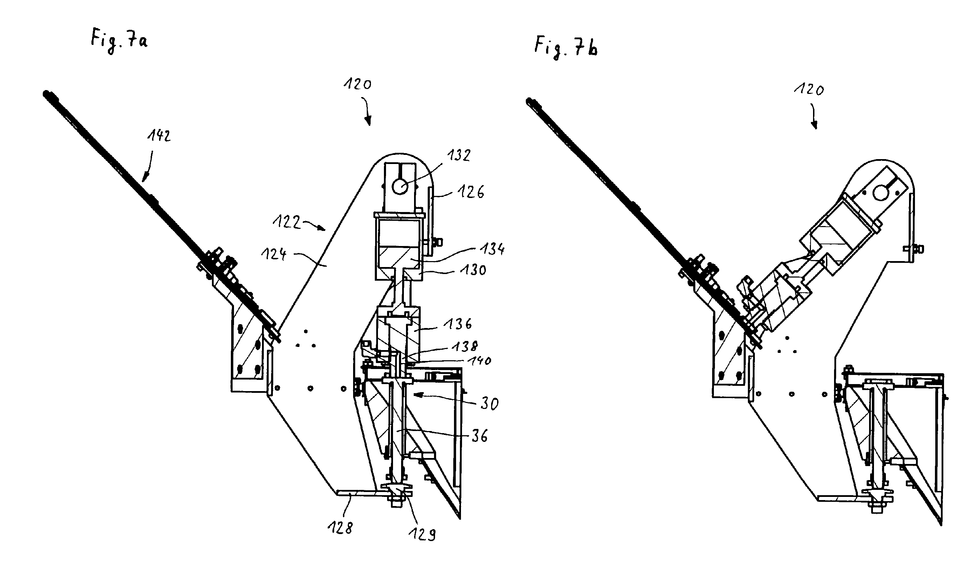

Eine Presseinrichtung 120 befindet sich im Gegenuhrzeigersinn benachbart zu der Abstreifeinrichtung 100 (Fig. 1, 2 und 7a, b) ortsfest auf dem Maschinentisch 18. Die Presseinrichtung 120 weist ein in seitlicher, tangentialer Richtung gesehen etwa C-förmiges Grundgestell 122 auf, das im wesentlichen aus zwei parallel und mit Abstand zueinander angeordneten Seitenteilen 124, einem oberen senkrechten Verbindungsteil 126 und einem unteren horizontalen Verbindungsteil 128 besteht und an dem Maschinentisch 18 befestigt ist. An oberen Endabschnitten der Seitenteile 124 ist ein Presszylinder 130 um eine Schwenkachse 132 schwenkbar gehalten, wobei Fig. 7a und 7b zwei Schwenkpositionen zeigen. Das untere Verbindungsteil 128 trägt ein Widerlager 129, auf das der Stößel 36 einer in die Presseinrichtung bewegten Halteeinrichtung 30 aufläuft und ggf. geringfügig angehoben wird, um nicht mehr auf dem Drehtisch aufzuliegen, so daß ein C-förmiger Kraftfluss innerhalb der Presseinrichtung sichergestellt ist.

Der Presszylinder 130 nimmt einen längsverschieblich geführten Kolben 134 auf, der pneumatisch oder hydraulisch betätigt ist und mit einer Presseinheit 136 verbunden ist, die einen fest damit verbundenen, zylindrischen Presskolben 138 sowie zwei seitlich benachbart dazu angeordnete, mit relativ starken Federn nach unten federbelastete Niederhalter (nicht dargestellt) aufweist. Die Niederhalter haben die Aufgabe, beim Presshub der Presseinheit 136, noch bevor der Presskolben 138 auf den betreffenden Stahlring wirkt, auf die den Stahlring 34 haltenden Spannarme 48 zu drücken und eine sichere Fixierung des Stahlrings zusätzlich zur eigenen Spannwirkung der Spannarme 48 (Druckfedern 52) sicherzustellen. Der Presskolben 138 hat einen Außendurchmesser, der etwas geringer ist als der Innendurchmesser eines Stahlrings 34.

Wie Fig. 7a, b erkennen lassen, ist der Presskolben 138 mit einer zentralen Saugbohrung 140 versehen, die an ein steuerbares Unterdrucksystem angeschlossen ist.

In der in Fig. 7b dargestellten Aufnahmeposition des Presszylinders 130, in der dieser gegenüber der Pressposition nach Fig. 7a um einen Winkel von ca. 45° bezüglich des Drehtisches nach außen verschwenkt ist, wirkt der Presskolben 138 mit einer Zufördereinrichtung 142 zusammen, die als Rutsche ausgebildet ist und der Zuführung von runden Verschlusselementen 144 dient, die in die Hohlkörper 34 einzupressen sind. Mittels Unterdruck kann der Presskolben 138 jeweils ein Verschlusselement 144 aufnehmen, angesaugt halten und mit diesem in die Pressposition zurückschwenken.

Die Betätigung der Schwenkbewegung des Presszylinders 130 zwischen der Press- und Aufnahmeposition erfolgt durch eine Antriebszylindereinheit 146, deren Kolbenstange mit einem Betätigungsarm 148 verbunden ist, der seinerseits mit der Schwenkachse 132 drehfest verbunden ist (Fig. 2).

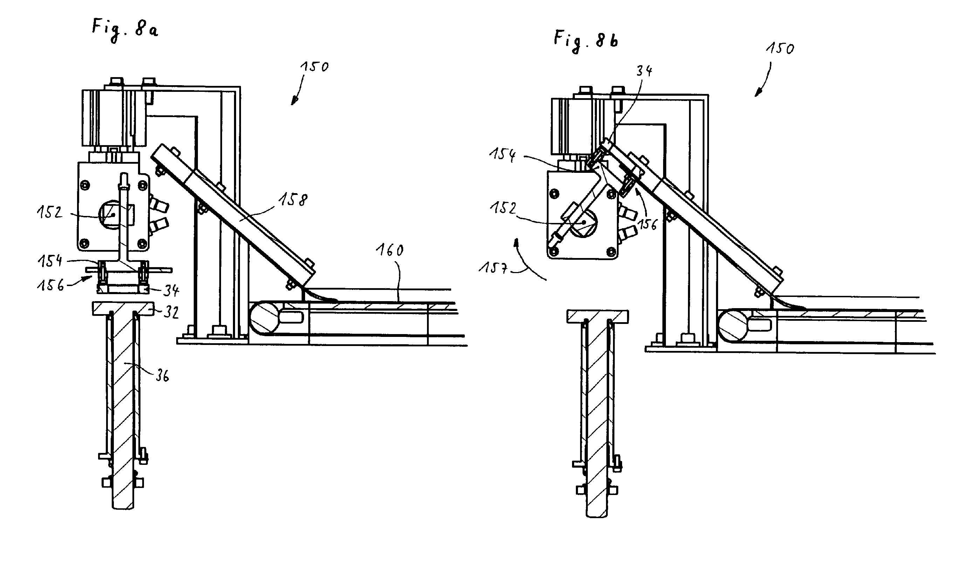

Fig. 8a, b zeigen eine Ausgabeeinrichtung 150 in Form eines um eine horizontale Schwenkachse 152 über einen Winkel von ca. 125° arbeitenden Greifers 154, der einen Greifkopf 156 mit mehreren unterdruckbeaufschlagbaren Saugnäpfen, die über die obere Umfangsfläche eines Stahlrings 34 verteilt angeordnet sind, zur Aufnahme eines befüllten, verpressten Stahlrings 34 aufweist und diesen von einer Halteeinrichtung 30 aufnimmt, in Pfeilrichtung 157 verschwenkt und auf einer schrägen Abgaberutsche 158 ablegt. Die Abgaberutsche 158 mündet auf eine Abfördereinrichtung 160 in Form eines Förderbands und weist einen seitlich hinund hergehenden, wellenartigen Verlauf auf, damit eine gewisse Bremswirkung auf einen heruntergleitenden Hohlkörper ausgeübt wird.

Durch den eine Schwenkbewegung ausführenden Greifer 154 werden die mit einem Verschlusselement versehenen Hohlkörper 34 bis zur Ablage auf der Abfördereinrichtung 160 um 180° gedreht, so dass das in der Presseinrichtung von oben eingebrachte Verschlusselement 144 nicht mehr oben, sondern in dem Stahlring 34 unten liegt und dadurch keine Gefahr besteht, dass das verpresste pulverförmige Material aus dem Hohlkörper nach unten herausfallen kann, was der Fall wäre, wenn die verpressten Hohlkörper in ihrer ursprünglichen Lage, die sie nach der Presseinrichtung 120 einnehmen, herausbefördert würden. Auch der Ausgabeeinrichtung 150 ist eine (ebenfalls ortsfest angeordnete) Öffnungseinrichtung 74 zugeordnet, wie sie im Zusammenhang mit der Zuführeinrichtung 60 beschrieben worden ist.

Eine Reinigungseinrichtung 170 befindet sich benachbart zu der Ausgabeeinrichtung 150 und somit zwischen dieser und der Zuführeinrichtung 60. Zur Erläuterung von Aufbau und Funktion der Reinigungseinrichtung 170 sei nochmals auf Fig. 9a, b Bezug genommen. Eine in radialer Richtung verfahrbare, um eine vertikale Drehachse 172 rotierende Reinigungsbürste 174 fährt durch den Zwischenraum zwischen Auflage 32 und Spannarmen 48 einer Halteeinrichtung 30 und befreit somit sämtliche wesentlichen Elemente der Halteeinrichtung direkt von möglicherweise darauf verbliebenem pulverförmigem Material. Eine im Ganzen mit 74 bezeichnete Öffnungseinrichtung zum Anheben der Spannarme 48 relativ zu dem Stößel 36 befindet sich, wie bereits vorstehend im Zusammenhang mit der Zuführeinrichtung 60 beschrieben, unterhalb der Reinigungseinrichtung 170 und ermöglicht die Erzeugung des genannten Zwischenraums zum Hindurchführen des Reinigungsbürste 174. Die Öffnungseinrichtung besteht aus einer Kolben-/Zylindereinheit 68, an deren Kolbenstange 72 ein topfförmiges Druckteil 70 befestigt ist, welches auf eine Verbindungsplatte 50 zweier Zugstangen 46 einwirken kann, um diese zusammen mit den Spannarmen 48 anzuheben, während der Stößel 36 an Ort und Stelle verbleibt.

Der Drehtisch 2 ist zweckmäßigerweise mit einer fast vollständig geschlossenen Abdeckung 180 (in Fig. 3, 4a und 6 erkennbar) versehen, die ortsfest an dem Maschinentisch 18 befestigt und mit Öffnungen für die Ein- und Ausgabe der Stahlringe, für die Dosierung, den Presszylinder, die Reinigungsbürste usw. versehen ist. Dadurch ist ein Schutz der Stahlringe vor Verunreinigungen von außen gegeben, und außerdem wird die Absaugung überschüssigen Materials erleichtert.

Die Funktion der Pressvorrichtung ist wie folgt. Die Vorrichtung wird vorzugsweise durch eine nicht näher dargestellte automatische Steuerung gesteuert, die das taktweise Zusammenwirken der vorstehend beschriebenen Halte-, Zuführ-, Dosier-, Abstreif-, Press-, Ausgabeund Reinigungseinrichtungen, einschließlich Zuförderer 66 und Abfördereinrichtung 160, steuert. Der Schwenkgreifer 62 entnimmt einen leeren Stahlring 34 von dem Zuförderer 66 (Förderband) und legt diesen auf eine bereitstehende Halteeinrichtung 30 ab, d.h. auf den Kopf eines Stößels 36 bzw. die Auflage 32, so dass die von der Öffnungseinrichtung 74 betätigten Spannarme 48 den Stahlring 34 gegen den Kopf 40 andrücken und damit fixieren können. Daraufhin fährt der Maschinentisch 18 um einen vorgegebenen Drehwinkel, hierbei 60°, weiter, so dass der eingelegte Stahlring die Dosiereinrichtung 80 erreicht.

Wenn ein Steuerbefehl gegebenen wurde, dass mehr als ein Stahlring befüllt werden soll, erfolgt der anschließende Dosiervorgang gleichzeitig mit einem weiteren Eingabevorgang eines zweiten Stahlrings 34 der Zuführeinrichtung 60 in eine weitere Halteeinrichtung 30. Ansonsten laufen die nachfolgend beschriebenen Schritte nur für den einen eingelegten Stahlring ab. Auch ein kontinuierlicher Betrieb ist möglich, bei dem bei jedem Arbeitstakt ein neuer Stahlring eingelegt wird und diese entsprechend gefüllt und verpresst werden.

In der Dosiereinrichtung 80 fährt der Dosierkopf 82 radial auswärts über eine Halteeinrichtung vor und ermöglicht die Befüllung des Einfülltrichters 90 von Hand oder mit einem geeigneten Roboter, wobei eine mindestens für einen Stahlring 34 ausreichende Menge an pulverförmigen Material eingefüllt wird. Dieser Befüllvorgang kann natürlich auch vorab erfolgen. Die genaue Dosierung erfolgt mit Hilfe des Dosierschlauchs 92 und der gesteuert verfahrbaren, mit Abstand angeordneten Klemmbacken. Nach Abschluss des Dosiervorgangs fährt der Einfülltrichter 90, sofern kein weiterer Dosiervorgang erfolgen soll, radial nach innen zurück und wird mittels Druckluft mit Hilfe einer senkrecht stehenden, vertikal verfahrbaren Reinigungslanze gereinigt, wobei auch der Dosierschlauch ausgeblasen wird, damit die Dosiereinrichtung für einen weiteren Dosiervorgang, bei dem möglicherweise unterschiedliches Analysematerial zu dosieren ist, gereinigt zur Verfügung steht. Nach Weitertakten des Maschinentischs 18 um 60° wird der leicht überfüllte Stahlring 34 von der Abstreifeinrichtung abgestreift, so dass er nunmehr bündig mit dem pulverförmigen Material gefüllt ist.

Das bei den vorbeschriebenen und ggf. auch bei den weiteren Schritten nach unten fallende pulverförmige Material gelangt in den Auffangtrichter 10, aus dem es mit dem Saugschlauch 24 abgesaugt wird.

Als nächstes erreicht der gefüllte Stahlring die Presseinrichtung 120. Der Presszylinder 130 wird zunächst, oder wurde bereits vor Eintreffen des gefüllten Stahlrings, in die Aufnahmestellung verschwenkt, in der der Presskolben 138 mit Hilfe der Saugbohrung 140 ein napfförmiges Verschlusselement 144 aufnimmt, und wird in die vertikale Pressstellung zurückgeschwenkt.

Bei der Ausführung des Presshubs werden zunächst, bevor der Presskolben auf den Stahlring einwirkt, zwei benachbarte, mit relativ starken Federn belastete Niederhalter, die in der Presseinheit 136 gelagert sind, gegen die Spannarme 48 gedrückt, so dass der von der jeweiligen Halteeinrichtung 30 aufgenommene Stahlring 34 unverschieblich festgehalten ist. Bei weiterem Absenken der Presseinheit 138 kommt der Presskolben 138 und das von diesem gehaltene Verschlusselement 142 in Zusammenwirken mit dem Stahlring 34. Das Verschlusselement 44 wird in den Stahlring eingepresst und das pulverförmige Material gleichzeitig verpresst. Anschließend fährt die Presseinheit 136 wieder nach oben und gibt die Halteeinrichtung 30 frei.

Bei einer weiteren Drehbewegung des Maschinentischs 18 um 60° gelangt der fertig verpresste Stahlring in den Bereich der Ausgabeeinrichtung 150, wo er aus der Halteeinrichtung 30 entnommen, gewendet und auf der Abfördereinrichtung 160 abgelegt wird.

Die betreffende Halteeinrichtung 30, die nunmehr frei ist, wird durch einen weiteren Maschinentakt um 60° weitergedreht und gelangt zu der Reinigungseinrichtung 170. Die Öffnungseinrichtung 74 hebt die Zugstangen 46 und Spannarme 48 an, so dass die Reinigungsbürste 174 die für die Fixierung eines Stahlrings 34 relevanten Teile reinigen kann. Die nächste Station ist wiederum die Zuführeinrichtung 60.

Fig. 10 zeigt eine Querschnittsansicht eines fertig mit pulverförmigem Material 26 verpressten und mit einem eingepressten napfförmigen Verschlusselement 144 versehenen Stahlrings 34.

### Bezugszeichenliste

- 2: Drehtisch
- 4: Drehachse
- 5: Arbeitsrichtung
- 6: Lager
- 8: Maschinengestell
- 10: Auffangtrichter
- 12: Kettenrad
- 14: Antriebsmotor
- 16: Antriebskette
- 18: Maschinentisch
- 20: Lagerrohr
- 22: Absaugstutzen
- 24: Saugschlauch
- 26: pulverförmiges Material
- 30: Halteeinrichtung
- 32: Auflage
- 34: Hohlkörper (Stahlring)
- 36: Stößel
- 38: Führung
- 44: Führung
- 46: Zugstange
- 48: Spannarm
- 50: Verbindungsplatte
- 52: Druckfeder
- 60: Zuführeinrichtung
- 62: Schwenkgreifer
- 64: Schwenkachse
- 65: erste Schwenkposition
- 67: zweite Schwenkposition
- 66: Zuförderer
- 68: Kolben-/Zylindereinheit
- 70: Druckteil
- 72: Kolbenstange
- 74: Öffnungseinrichtung
- 80: Dosiereinrichtung
- 82: Dosierkopf
- 83: Bewegungsrichtung
- 84: Kolbenstange
- 86: Kolben-/Zylindereinheit
- 88: Befestigungswinkel
- 90: Einfülltrichter
- 92: Dosierschlauch
- 94,96: Führungsnut
- 98: Dosiermündung
- 100: Abstreifeinrichtung
- 102: Kolben-/Zylindereinheit
- 104: Kolbenstange
- 106: Abstreifelement
- 108: Abstreifkante
- 120: Presseinrichtung
- 122: Grundgestell
- 124: Seitenteil
- 126: oberes Verbindungsteil
- 128: unteres Verbindungsteil
- 129: Widerlager
- 130: Presszylinder
- 132: Schwenkachse
- 134: Kolben
- 136: Presseinheit
- 138: Presskolben
- 140: Saugbohrung
- 142: Zufördereinrichtung
- 144: Verschlusselement
- 146: Antriebszylinder
- 148: Hebelarm
- 150: Ausgabeeinrichtung
- 152: Schwenkachse
- 154: Greifer
- 156: Greifkopf
- 157: Schwenkrichtung
- 158: Abgaberutsche
- 160: Abfördereinrichtung
- 170: Reinigungseinrichtung
- 172: Drehachse
- 174: Reinigungsbürste
- 180: Abdeckung

## Patentansprüche

1. Vorrichtung zum Einpressen pulverförmigen Materials in Hohlkörper (34), mit einem um eine Drehachse (4) taktweise drehantreibbaren Drehtisch (2), auf dem in gleichen gegenseitigen, auf die Drehachse (4) bezogenen Umfangswinkelabständen Halteeinrichtungen (30) zum vorübergehenden Fixieren jeweils eines Hohlkörpers (34) angeordnet sind, wobei benachbart zu dem Drehtisch (2) in übereinstimmenden Umfangswinkelabständen Arbeitsstationen (60, 80, 100, 120, 150, 170) zum Zusammenwirken mit in den Halteeinrichtungen (30) gehaltenen Hohlkörpern (34) angeordnet sind, wobei eine erste Arbeitsstation eine Zuführeinrichtung (60) für einzelne Hohlkörper (34) aufweist, eine zweite Arbeitsstation eine Dosiereinrichtung (80) für zu verpressendes pulverförmiges Material aufweist, eine dritte Arbeitsstation eine Abstreifeinrichtung (100) zum Abstreifen überschüssigen pulverförmigen Materials aufweist, eine vierte Arbeitsstation eine Presseinrichtung (120) zum Verpressen von in einen Hohlkörper (34) dosierten Materials aufweist, eine fünfte Arbeitsstation eine Ausgabeeinrichtung (150) zum Ausgeben eines mit verpresstem Material gefüllten Hohlkörpers aufweist, und eine sechste Arbeitsstation eine Reinigungseinrichtung (170) zum Reinigen einer Halteeinrichtung (30) vor dem Einlegen eines Hohlkörpers (34) aufweist.

2. Vorrichtung nach Anspruch 1, **dadurch gekennzeichnet, daß** unter dem Drehtisch (2) eine Sammeleinrichtung (10) für von den einzelnen Arbeitsstationen (60, 80, 100, 120, 150, 170) herabfallendes pulverförmiges Material angeordnet ist.

3. Vorrichtung nach Anspruch 1 oder 2, **dadurch gekennzeichnet, dass** jede Halteeinrichtung (30) eine Auflage (32) für einen Hohlkörper (34) und mindestens einen Spannarm (48) zum Aufspannen eines Hohlkörpers (34) auf die Auflage (32) aufweist.

4. Vorrichtung nach einem der vorangehenden Ansprüche, **dadurch gekennzeichnet, dass** die Zuführeinrichtung (60) einen Schwenkgreifer (62) zum Aufnehmen eines Hohlkörpers (34) von einer Zufördereinrichtung (36) und zum Auflegen auf eine Auflage (32) einer Halteeinrichtung (30) aufweist.

5. Vorrichtung nach einem der vorangehenden Ansprüche, **dadurch gekennzeichnet, daß** die Dosiereinrichtung (80) einen an einen Materialvorrat angeschlossenen Dosierschlauch (92) und zwei beiderseits des Dosierschlauchs angeordnete und mit diesem zusammenwirkende Klemmbackenpaare aufweist.

6. Vorrichtung nach einem der vorangehenden Ansprüche, **dadurch gekennzeichnet, dass** der Dosiereinrichtung (80) eine mit Druckluft beaufschlagbare Reinigungslanze zugeordnet ist.

7. Vorrichtung nach einem der vorangehenden Ansprüche, **dadurch gekennzeichnet, dass** die Abstreifeinrichtung (100) ein parallel zu dem Drehtisch (2) verfahrbares Abstreifelement (106) aufweist.

8. Vorrichtung nach einem der vorangehenden Ansprüche, **dadurch gekennzeichnet, dass** die Presseinrichtung (120) einen zylindrischen Presskolben (138) aufweist.

9. Vorrichtung nach einem der vorangehenden Ansprüche, **dadurch gekennzeichnet, dass** die Presseinrichtung (120) mindestens einen federbelasteten Niederhalter zur Anlage gegen mindestens einen Spannarm einer Halteeinrichtung (30) aufweist.

10. Vorrichtung nach einem der vorangehenden Ansprüche, **dadurch gekennzeichnet, dass** die Presseinrichtung (120) einen zwischen einer Pressposition und einer Aufnahmeposition schwenkbaren Presszylinder (130), in oder an dem ein Presskolben (138) geführt ist, aufweist, wobei der Presskolben (138) in der Aufnahmeposition mit einer Zufördereinrichtung (144) für in die Hohlkörper (34) einzupressende Verschlusselemente (44) zusammenwirkt.

11. Vorrichtung nach einem der Ansprüche 13 bis 15, **dadurch gekennzeichnet, dass** der Presskolben (138) eine Saugbohrung (140) zum Ansaugen und Halten eines Verschlusselementes (144) aufweist.

12. Vorrichtung nach einem der vorangehenden Ansprüche, **dadurch gekennzeichnet, dass** die Ausgabeeinrichtung (150) einen Schwenkgreifer (154) zum Erfassen eines Hohlkörpers (34) und Ablegen auf einer Abfördereinrichtung (160) aufweist, wobei der Schwenkgreifer (154) zum Ablegen der Hohlkörper (34) in einer um 180° gedrehten Orientierung auf der Abfördereinrichtung (160) um eine horizontale Schwenkachse (152) schwenkbeweglich ist.

13. Vorrichtung nach einem der vorangehenden Ansprüche, **dadurch gekennzeichnet, dass** die Reinigungseinrichtung (170) eine parallel zu dem Drehtisch (2) bewegbare Reinigungsbürste (174) aufweist.

14. Vorrichtung nach Anspruch 13, **dadurch gekennzeichnet, dass** der Reinigungseinrichtung (170) eine Öffnungseinrichtung (74) zum Abheben der Spannarme (48) von einer Auflage (32) einer Halteeinrichtung (30) zugeordnet ist.

15. Vorrichtung nach einem der vorangehenden Ansprüche, **dadurch gekennzeichnet, daß** der Zuführeinrichtung (60) und/oder der Ausgabeeinrichtung (150) eine Öffnungseinrichtung (74) zum Abheben der Spannarme (48) von einer Auflage (32) einer Halteeinrichtung (30) zugeordnet ist.
